# EUROPÄISCHE PATENTSCHRIFT

(11) **EP 2 506 097 B1**
(45) Veröffentlichungstag und Bekanntmachung des Hinweises auf die Patenterteilung: **20.04.2016**
(21) Anmeldenummer: 11002538.4
(22) Anmeldetag: 28.03.2011
(51) Int. Cl.: G05B 19/042, G05B 19/05, B29C 45/82, F15B 13/12

(54) **Regelungssystem zur Ansteuerung eines Aktors, Verfahren zum Betreiben eines Aktors und Computerprogrammprodukt**
Regulation system for controlling an actuator, method for operating an actuator and computer program product
Système de réglage pour la commande d'un actionneur, procédé de fonctionnement d'un actionneur et produit de programme informatique

(43) Veröffentlichungstag der Anmeldung: 03.10.2012
(73) Patentinhaber: FESTO AG & Co. KG, 73734 Esslingen (DE)
(72) Erfinder: Hildebrandt, Alexander, Dr., 72669 Unterensingen (DE); Neumann, Rüdiger, Dr., 73760 Ostfildern (DE); Hartmann, Armin, 73760 Ostfildern (DE)
(74) Vertreter: Patentanwälte Magenbauer & Kollegen Partnerschaft mbB

(56) Entgegenhaltungen:
- EP-A2- 0 995 578
- EP-A2- 1 414 059
- WO-A1-2008/119306
- DE-A1- 19 828 024
- US-A1- 2010 057 262

## Beschreibung

Die Erfindung betrifft ein Regelungssystem zur Ansteuerung eines Aktors, insbesondere eines Fluidzylinders oder eines fluidischen Muskels, mit einer speicherprogrammierbaren Steuerung. Ferner betrifft die Erfindung ein Verfahren zum Betreiben eines Aktors und ein Computerprogrammprodukt.

Aus der EP 0 955 578 A2 sind eine Vorrichtung und ein Verfahren zur Ansteuerung einer Spritzgussmaschine bekannt, bei der einem hydraulischen Aktor ein Mikrocontroller zugeordnet ist, der zur Steuerung oder Regelung der Bewegung des Aktors ausgebildet ist. Der Mikrocontroller ist mit einem Systemprozessor gekoppelt, wodurch eine verteilte Architektur geschaffen wird. In dem Mikrocontroller ist ein Regler enthalten, der zur Kompensation von nichtlinearen Eigenschaften des zugeordneten Aktors ausgebildet ist.

Die DE 19828024 A1 offenbart eine Regelanordnung zur Regelung von wenigstens einem an einem Bussystem angeschlossenen Positionierantrieb, insbesondere pneumatischen Positionierantrieb, wobei das Bussystem eine Recheneinheit und mehrere Busstationen aufweist und wobei Sensoren und Aktoren jedes Positionierantriebs mit einer diesem Positionierantrieb zugeordneten Busstation verbunden sind und wobei wenigstens eine Busstation ausschließlich zur Übertragung der Aktor- und Sensorsignale zwischen dem wenigstens einen Positionierantrieb und der Recheneinheit vorgesehen ist und die Recheneinheit als alle Regelaufgaben wahrnehmende zentrale Regeleinrichtung ausgebildet ist.

Aus der WO 2008119306 A1 ist ein Reglermodul zur Regelung eines Aktors bekannt, das eine Regler-Kommunikationsschnittstelle zur Regler-Stellwert-Ausgabe und zum Istwert-Empfang aufweist, wobei das Reglermodul Verkettungskontakte zur Anreihung an eine fluidtechnische, insbesondere pneumatische, Ventilbatterie mit mehreren in einer Reihenrichtung nebeneinander angeordneten Ventilmodulen zur fluidtechnischen Ansteuerung fluidtechnischer Aktoren aufweist, und eine Internbus-Schnittstelle zum Anschluss an einen internen Kommunikationsbus der Ventilbatterie umfasst sowie über den internen Kommunikationsbus mit einer Ventilbatterie-Kommunikationseinrichtung zu einer externen Kommunikation der Ventilbatterie verbindbar ist.

Mit den aus dem Stand der Technik bekannten Regelungssystemen können komplexe Regelungsfunktionen, insbesondere für nichtlineare Regelungsabläufe, nur mit Zusatzmodulen vorgenommen werden, die entweder der speicherprogrammierbaren Steuerung als Einschubkarte oder Erweiterungsmodul zugeordnet sind oder am anderen Ende des Signalübertragungssystems nahe dem anzusteuernden Aktor, beispielsweise in Form eines diskreten Reglermoduls ausgebildet sind.

Die Aufgabe der Erfindung besteht darin, ein Regelungssystem für einen Aktor, ein Verfahren zum Betreiben eines Aktors und ein Computerprogrammprodukt bereitzustellen, mit deren Hilfe bei der Ansteuerung des Aktors auf zusätzliche, individuell auf den Aktor angepasste Hardware verzichtet werden kann. Diese Aufgabe wird gemäß einem ersten Aspekt der Erfindung für ein Regelungssystem der eingangs genannten Art mit den Merkmalen des Anspruchs 1 gelöst.

Der in der speicherprogrammierbaren Steuerung ausgebildete Regler ist dazu vorgesehen, eine vorgebbare, vorzugsweise lineare, Beziehung zwischen einem von der speicherprogrammierbaren Steuerung vorgegebenen Sollwert und einem Istwert des anzusteuernden Aktors zu gewährleisten. Bei den bislang aus dem Stand der Technik bekannten, in der speicherprogrammierbaren Steuerung implementierten Reglern handelte es sich um lineare Regler, insbesondere um Zweipunktregler, Dreipunktregler, PI-Schrittregler oder PID-Schrittregler. Diese Regler können aufgrund der nichtlinearen Eigenschaften der durch den fluidischen Aktor bestimmten Regelstrecke nicht die gewünschte vorgebbare Beziehung zwischen dem Sollwert und dem Istwert des Aktors herstellen. Durch den Regler besteht nunmehr trotz der gegebenen nichtlinearen Eigenschaften bei der Ansteuerung des Aktors eine eindeutige Zuordnung zwischen dem Sollwert der Regelung und dem Istwert am Aktor. Auf Zusatzmodule, wie sie aus dem Stand der Technik bekannt sind und die jeweils spezifisch auf die eingesetzte Steuerung und gegebenenfalls auf den Aktor angepasst werden müssen, kann dementsprechend verzichtet werden.

Dabei ist der Regler als Softwaremodul in der speicherprogrammierbaren Steuerung implementiert. Hierdurch kann eine vorteilhafte Anpassung an den jeweiligen Aktor gewährleistet werden. Beispielsweise kann der jeweilige Regler beim Aufbau des Regelungssystems in einem Speicherbereich der speicherprogrammierbaren Steuerung abgespeichert werden. Somit ist es möglich, unterschiedliche Regler, die an unterschiedliche Aktoren angepasst sind, sehr kostengünstig bereitzustellen, da diese Regler keinen Eingriff in die Hardware des Regelungssystems erfordern. Eine Anpassung des jeweiligen Reglers an den anzusteuernden Aktor erfolgt vorzugsweise durch eine Parametrierung von Reglereigenschaften. Diese Parametrierung kann individuell von einem Benutzer vorgenommen werden oder erfolgt durch Laden eines Parametersatzes in die speicherprogrammierbare Steuerung. Der hierzu notwendige Parametersatz kann insbesondere aus einer externen oder internen Parameterbibliothek abgerufen werden.

Vorteilhaft ist es, wenn ein Sensor für eine Erfassung einer Aktorposition und/oder ein Sensor für eine Erfassung eines Fluiddrucks im Aktor und/oder ein Sensor für eine vom Aktor ausgeübte Vorschubkraft vorgesehen sind. Mit Hilfe wenigstens eines Sensorsignals, das die Aktorposition oder den Fluiddruck oder die vom Aktor ausgeübte Vorschubkraft repräsentiert, wird die Regelschleife für den Regler geschlossen, indem ein Istwert an die speicherprogrammierbare Steuerung bereitgestellt wird. Vorzugsweise sind mehrere Sensoren vorgesehen, deren Sensorsignale im Regler verarbeitet werden, um ein besonders vorteilhaftes Regelverhalten zu gewährleisten.

Bevorzugt ist der Regler für die Ausgabe einer Ventilstellung als Ausgangsgröße ausgebildet. Eine Position eines Stellglieds, beispielsweise einer Kolbenstange, des fluidischen Aktors und/oder eine vom Stellglied ausgeübte Stellkraft wird im Wesentlichen durch den Zustrom und/oder Abstrom von Fluid in wenigstens eine Arbeitskammer des Aktors bestimmt. Der jeweilige Fluidstrom wird üblicherweise mittels eines in eine Versorgungsleitung eingeschleiften elektromechanischen Ventils, beispielsweise eines Schaltventils oder eines Proportionalventils, beeinflusst, das eine elektrisch ansteuerbare Stelleinrichtung umfasst und das von der speicherprogrammierbaren Steuerung ansteuerbar ist. Um eine gezielte Einstellung der gewünschten Position und/oder der gewünschten Stellkraft durch den Aktor zu erzielen, wird im Regler anhand eines Vergleichs von Istwerten und Sollwerten unter Einbeziehung des nichtlinearen Regelalgorithmus eine Ventilstellung für das wenigstens eine Ventil ermittelt und über das Signalübertragungssystem an das zugeordnete Ventil bereitgestellt.

Erfindungsgemäß ist vorgesehen, dass der Regler wenigstens einen Beobachteralgorithmus umfasst, der für eine Ermittlung eines virtuellen Sensorsignals ausgebildet ist. Bei bestimmten Regelungsaufgaben für den Aktor kann es vorteilhaft sein, dem Regelalgorithmus eine Information über den Istzustand des Aktors zuzuführen, die aus technischen oder wirtschaftlichen Gründen nicht messbar ist. Beispielsweise steht für diese Information kein geeigneter Sensor zur Verfügung oder eine Messung der Information kann nur mit einem erheblichen Aufwand unter Verwendung kostenintensiver Sensorik vorgenommen werden. Dementsprechend ist es vorteilhaft, wenn die erforderliche Information oder Eingangsgröße auf anderem Wege ermittelt werden kann. Hierzu wird erfindungsgemäß ein im Regler implementierter Beobachter eingesetzt, der anhand von Eingangsgrößen wie Stellgrößen für den Aktor und/oder gemessenen Sensorsignalen unter Verwendung eines nichtlinearen mathematischen Modells die nicht messbare Information ermittelt. In diesem Zusammenhang wird auch der Begriff eines referenzgeregelten Synthetisierers für die Ermittlung des virtuellen Sensorsignals verwendet. Die ermittelte Information wird dem Regelalgorithmus bereitgestellt, um eine Verbesserung des Regelverhaltens zu erzielen.

Die Aufgabe der Erfindung wird gemäß einem zweiten Aspekt für ein Verfahren mit den Merkmalen des Anspruchs 4 gelöst. Hierbei ist vorgesehen, einen Aktor, insbesondere einen Fluidzylinder oder einen fluidischen Muskel, mittels einer speicherprogrammierbaren Steuerung, die über ein als Feldbussystem ausgebildetes Signalübertragungssystem mit einem dem Aktor zugeordneten Busteilnehmer elektrisch verbunden ist, anzusteuern. Hierbei ist dem Aktor ein elektrisch mit dem Busteilnehmer verbundener Sensor zur Ermittlung eines Betriebszustands und zur Bereitstellung eines Sensorsignals an die speicherprogrammierbare Steuerung zugeordnet und es werden die folgenden Schritte ausgeführt: Bereitstellen einer Sollgröße für den Aktor durch eine in der speicherprogrammierbaren Steuerung vorgesehene Ablaufsteuerung, Ermitteln einer Istgröße für den Aktor anhand wenigstens eines Sensorsignals des Sensors in der Steuerung, Ermitteln einer Stellgröße für den Aktor mittels eines in der speicherprogrammierbaren Steuerung abgespeicherten Softwaremoduls, das einen Regelalgorithmus umfasst, der zur Kompensation von nichtlinearen Eigenschaften einer vom Aktor bestimmten Regelstrecke ausgebildet ist und der einen Beobachteralgorithmus umfasst, der für eine Ermittlung eines virtuellen Sensorsignals anhand des gemessenen Sensorsignals und/oder einer Stellgröße für den Aktor unter Verwendung eines nichtlinearen mathematischen Modells ausgebildet ist, Ausgeben der Stellgröße über das als Feldbussystem ausgebildete Signalübertragungssystem an den dem Aktor zugeordneten Busteilnehmer. Mit Hilfe des erfindungsgemäßen Verfahrens ist es möglich, eine bekannte speicherprogrammierbare Steuerung ohne zusätzliche Erweiterungshardware für die Ansteuerung eines nichtlinear agierenden Aktors, beispielsweise eines fluidischen Aktors, einzusetzen. Hierzu wird in der speicherprogrammierbaren Steuerung anhand eines dort fest abgelegten oder individuell einzuspeichernden nichtlinearen Regelalgorithmus eine vorgebbare Beziehung zwischen einem von der Steuerung bereitgestellten Sollwert und einem am Aktor vorliegenden Istwert hergestellt und daraus eine Stellgröße ermittelt, die zur Ansteuerung des Aktors eingesetzt wird.

Die Aufgabe der Erfindung wird gemäß einem dritten Aspekt für ein Computerprogrammprodukt mit den Merkmalen des Anspruchs 5 gelöst. Das erfindungsgemäße Computerprogrammprodukt umfasst computerimplementierte Anweisungen, die nach dem Laden in eine speicherprogrammierbare Steuerung eines Regelungssystems nach einem der Ansprüche 1 bis 3 ausgeführt werden können, um Verfahrensschritte gemäß dem Anspruch 4 auszuführen. Vorzugsweise wird ein derartiges Computerprogrammprodukt auf eine vorgebbare Gruppe von Aktoren oder individuell auf einen einzelnen Aktor abgestimmt und kann von einem Benutzer des Regelungssystems im Bedarfsfall in das Regelungssystem geladen werden. Gegebenenfalls ist vor bzw. bei der Inbetriebnahme des Aktors noch eine Parametrierung des Reglers notwendig, die vom Benutzer individuell oder durch Laden eines Parametersatzes aus einer Parameterbibliothek

vorgenommen werden kann. Das Computerprogrammprodukt ist vorzugsweise derart codiert, dass es unmittelbar oder nach Durchführung einer geeigneten Anpassung auf unterschiedlichen Hardwareplattformen, also unterschiedlich ausgebildeten speicherprogrammierbaren Steuerungen ablaufen kann.

Eine vorteilhafte Ausführungsform der Erfindung ist in der Zeichnung dargestellt. Hierbei zeigt:

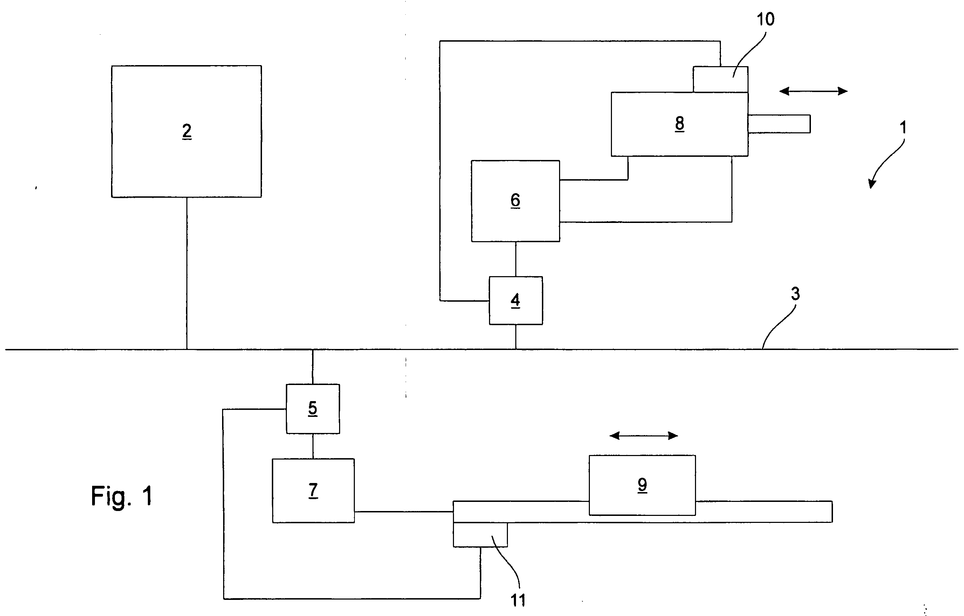

- Figur 1: eine schematische Darstellung eines Regelungssystems zur Ansteurung eines Aktors.

In der Figur 1 ist ein Regelungssystem 1 schematisch dargestellt. Das Regelungssystem 1 umfasst eine speicherprogrammierbare Steuerung 2, die grundsätzlich zur Bereitstellung von Steuerbefehlen und zur Verarbeitung von Sensorsignalen ausgebildet ist und die exemplarisch einen nicht näher dargestellten Mikroprozessor und einen dem Mikroprozessor zugeordneten, ebenfalls nicht dargestellten, frei programmierbaren Speicher umfasst. Die Steuerbefehle werden von der Steuerung 2 an ein Signalübertragungssystem 3 bereitgestellt, bei dem es sich exemplarisch um ein Bussystem, vorzugsweise um ein Feldbussystem, insbesondere um ein Feldbussystem nach dem Profibus-Protokoll, handelt. Das Signalübertragungssystem 3 dient zur Übertragung der Steuerbefehle an eine Vielzahl von Systemteilnehmern, insbesondere Busteilnehmern, von denen exemplarisch eine erste Ansteuerschaltung 4 und eine zweite Ansteuerschaltung 5 dargestellt sind.

Die Ansteuerschaltungen 4, 5 sind dazu eingerichtet, die über das Signalübertragungssystem 3 bereitgestellten Steuerbefehle der Steuerung 2 in Steuersignale für angeschlossene Komponenten umzuwandeln. Bei den angeschlossenen Komponenten handelt es sich beispielhaft um eine Ventilanordnung 6 und um einen elektrischen Leistungsschalter 7. Die Ventilanordnung 6 ist exemplarisch zur Bereitstellung eines druckbeaufschlagten Fluids, insbesondere von Druckluft, an einen exemplarisch als doppeltwirkenden Druckluftzylinder ausgebildeten fluidischen Aktor 8 ausgebildet. Der elektrische Leistungsschalter 7 ist zur Bereitstellung von elektrischer Energie an einen exemplarisch als Lineardirektantrieb ausgebildeten elektrischen Aktor 9 ausgebildet. Dem fluidischen Aktor 8 und dem elektrischen Aktor 9 ist jeweils ein Sensor 10, 11 zur Ermittlung der jeweiligen Aktorstellung zugeordnet. Die Sensoren 10, 11 stehen jeweils mit der zugeordneten Ansteuerschaltung 4, 5 in elektrischer Verbindung und ermöglichen hierdurch eine Bereitstellung des jeweiligen Sensorsignals über das Signalübertragungssystem 3 an die Steuerung 2.

Bei einer Inbetriebnahme eines derart aufgebauten Regelungssystems 1 wird in einem ersten Schritt zunächst eine Anpassung der Steuerung 2 an den einzusetzenden Aktor 8, 9 vorgenommen. Zu diesem Zweck kann es exemplarisch vorgesehen sein, dass ein Benutzer ein oder mehrere Softwaremodule oder Computerprogrammprodukte, die individuell auf den jeweiligen Aktor 8, 9 oder auf eine Gruppe ähnlicher Aktoren 8, 9 abgestimmt sind, in den Speicher der Steuerung 2 lädt. In einem weiteren Schritt kann vorgesehen sein, dass der Benutzer eine Parametrierung des jeweiligen Softwaremoduls durch entsprechende Eingaben in die Steuerung 2 vornimmt, um eine besonders vorteilhafte Anpassung des Softwaremoduls an den verwendeten Aktor 8, 9 zu erzielen.

Bei einem anschließenden Betrieb des Regelungssystems 1 werden beispielsweise anhand einer in der Steuerung abzuarbeitenden Ablaufsteuerung Steuerbefehle ausgegeben, die als Sollwerte zusammen mit gemessenen und/oder berechneten Istwerten für den jeweils zugeordneten Aktor 8, 9 an das jeweilige Softwaremodul bereitgestellt werden. Das Softwaremodul umfasst ein als Regelungsalgorithmus ausgebildetes Kompensationsglied, das zum Ausgleich der nichtlinearen Beziehungen zwischen den Sollwerten und den Istwerten vorgesehen ist und das anhand der zur Verfügung gestellten Sollwerte und Istwerte eine Stellgröße ausgibt. Diese Stellgröße wird als Steuersignal über das Signalübertragungssystem 3 an die jeweilige Ansteuerschaltung 4, 5 übertragen und dort in entsprechender Weise umgesetzt.

Beispielsweise wird das Steuersignal in den Ansteuerschaltungen 4, 5 in eine elektrische Größe zur Ansteuerung der Ventilanordnung 6 bzw. des Leistungsschalters 7 umgesetzt. Dementsprechend findet in der Ventilanordnung 6 und/oder im Leistungsschalter 7 eine Freigabe eines druckbeaufschlagten Fluids an den fluidischen Aktor bzw. eine Freigabe einer elektrischen Leistung an den elektrischen Aktor 9 statt, so dass diese eine Positionsänderung vornehmen können. Diese Positionsänderung wird über die zugeordneten Sensoren 10, 11, die Ansteuerschaltungen 4, 5 und das Signalübertragungssystem 3 an die Steuerung 2 im Sinne einer geschlossenen Regelschleife zurückgemeldet und wird dort als neuer Istwert für den nächsten Regelungsschritt verwendet.

## Patentansprüche

1. Regelungssystem zur Ansteuerung eines Aktors (8, 9), insbesondere eines Fluidzylinders oder eines fluidischen Muskels, umfassend eine speicherprogrammierbare Steuerung (2), ein Signalübertragungssystem (3), einen Aktor (8, 9), einen dem Aktor (8, 9) zugeordneten Busteilnehmer (4, 5) und einen Sensor (10, 11), wobei das als Feldbussystem ausgebildete Signalübertragungssystem (3) mit der speicherprogrammierbaren Steuerung (2) und dem Busteilnehmer (4, 5) elektrisch verbunden und für eine Signalübertragung zwischen der speicherprogrammierbaren Steuerung (2) und dem Busteilnehmer (4, 5) ausgebildet ist, wobei der Sensor (10, 11) dem Aktor (8, 9) zur Ermittlung eines Betriebszustands und zur Bereitstellung eines Sensorsignals an die speicherprogrammierbare Steuerung (2) zugeordnet ist, wobei der Sensor (10, 11) mit dem Busteilnehmer (4, 5) für eine Bereitstellung des Sensorsignals über das Signalübertragungssystem (3) an die speicherprogrammierbare Steuerung (2) in elektrischer Verbindung steht und wobei in der speicherprogrammierbaren Steuerung (2) ein Regler zur Ansteuerung des Aktors (8, 9) anhand von Steuerbefehlen und den Sensorsignalen des Sensors (10, 11) ausgebildet ist, wobei der Regler einen Regelalgorithmus umfasst, der zur Kompensation von nichtlinearen Eigenschaften einer vom Aktor (8, 9) bestimmten Regelstrecke ausgebildet ist, wobei der Regler als Softwaremodul in der speicherprogrammierbaren Steuerung (2) implementiert ist, **dadurch gekennzeichnet, dass** der Regler wenigstens einen Beobachteralgorithmus umfasst, der für eine Ermittlung eines virtuellen Sensorsignals anhand des gemessenen Sensorsignals und/oder einer Stellgröße für den Aktor unter Verwendung eines nichtlinearen mathematischen Modells ausgebildet ist.

2. Regelungssystem nach Anspruch 1, **dadurch gekennzeichnet, dass** ein Sensor (10, 11) für eine Erfassung einer Aktorposition und/oder ein Sensor (10) für eine Erfassung eines Fluiddrucks im Aktor (8, 9) und/oder ein Sensor (10, 11) für eine vom Aktor (8, 9) ausgeübte Vorschubkraft vorgesehen sind.

3. Regelungssystem nach Anspruch 1 oder 2, **dadurch gekennzeichnet, dass** der Regler für die Ausgabe einer Ventilstellung als Ausgangsgröße ausgebildet ist.

4. Verfahren zum Betreiben eines Aktors (8, 9), insbesondere eines Fluidzylinders oder eines fluidischen Muskels, mittels einer speicherprogrammierbaren Steuerung (2), die über ein Signalübertragungssystem (3) mit dem Aktor (8, 9) elektrisch verbunden ist, wobei dem Aktor (8, 9) ein elektrisch mit dem Busteilnehmer (4, 5) verbundener Sensor (10, 11) zur Ermittlung eines Betriebszustands und zur Bereitstellung eines Sensorsignals an die speicherprogrammierbare Steuerung (2) zugeordnet ist, **gekennzeichnet durch** die Schritte: Bereitstellen einer Sollgröße für den Aktor (8, 9) **durch** eine in der speicherprogrammierbaren Steuerung (2) vorgesehene Ablaufsteuerung, Ermitteln einer Istgröße für den Aktor (8, 9) anhand wenigstens eines Sensorsignals des Sensors (10, 11) in der Steuerung (2), Ermitteln einer Stellgröße für den Aktor (8, 9) mittels eines in der speicherprogrammierbaren Steuerung (2) abgespeicherten Softwaremoduls, das einen Regelalgorithmus umfasst, der zur Kompensation von nichtlinearen Eigenschaften einer vom Aktor (8, 9) bestimmten Regelstrecke ausgebildet ist und der einen Beobachteralgorithmus umfasst, der für eine Ermittlung eines virtuellen Sensorsignals anhand des gemessenen Sensorsignals und/oder einer Stellgröße für den Aktor unter Verwendung eines nichtlinearen mathematischen Modells ausgebildet ist, Ausgeben der Stellgröße über das Signalübertragungssystem (3) an den dem Aktor (8, 9) zugeordneten Busteilnehmer (4, 5).

5. Computerprogrammprodukt mit computerimplementierten Anweisungen, das nach dem Laden in eine speicherprogrammierbare Steuerung (2) eines Regelungssystems (1) nach einem der Ansprüche 1 bis 3, dazu ausgebildet ist, die Verfahrensschritte gemäß dem Anspruch 4 auszuführen.

## Claims

1. Control system for the control of an actuator (8, 9), in particular a fluid cylinder or a fluidic muscle, comprising a programmable control system (2), a signal transmission system (3), an actuator (8, 9), a bus user (4, 5) assigned to the actuator (8, 9), and a sensor (10, 11), wherein the signal transmission system (3) in the form of a field bus system is connected electrically to the programmable control system (3) and the bus user (4, 5) and is designed for signal transmission between the programmable control system (2) and the bus user (4, 5), wherein the sensor (10, 11) is assigned to the actuator (8, 9) to determine an operating status and to provide a sensor signal to the programmable control system (2), wherein the sensor (10, 11) is connected electrically to the bus user (4, 5) to provide the sensor signal to the programmable control system (2) over the signal transmission system (3) and wherein there is formed in the programmable control system (2) a controller to control the actuator (8, 9) with the aid of control commands and the sensor signals of the sensor (10, 11), wherein the controller includes a control algorithm which is designed to compensate for non-linear properties of a controlled system determined by the actuator (8, 9), wherein the controller is implemented as a software module in the programmable control system (2), **characterised in that** the controller includes at least one observer algorithm which is designed to determine a virtual sensor signal with the aid of the measured sensor signals and/or a control variable for the actuator using a non-linear mathematical model.

2. Control system according to claim 1, **characterised in that** a sensor (10, 11) to detect an actuator position and/or a sensor (10) to detect a fluid pressure in the actuator (8, 9) and/or a sensor (10, 11) for a feed force exerted by the actuator (8, 9) are provided.

3. Control system according to claim 1 or 2, **characterised in that** the controller is designed to output a valve position as output variable.

4. Method for the operation of an actuator (8, 9), in particular in particular a fluid cylinder or a fluidic muscle, by means of a programmable control system (2) which is connected electrically to the actuator (8, 9) via a signal transmission system (3), wherein the actuator (8, 9) is assigned a sensor (10, 11), electrically connected to the bus user (4, 5), to determine an operating status and to provide a sensor signal to the programmable control system (2), **characterised by** the steps: provision of a required value for the actuator (8, 9) by a sequence control system provided in the programmable control system (2), determination of an actual value for the actuator (8, 9) with the aid of at least one sensor signal of the sensor (10, 11) in the control system (2), determination of a control variable for the actuator (8, 9) by means of a software module stored in the programmable control system (2) which includes a control algorithm designed to compensate for non-linear properties of a controlled system determined by the actuator (8, 9), and which includes an observer algorithm designed to determine a virtual sensor signal with the aid of the measured sensor signal and/or a control variable for the actuator using a non-linear mathematical model, output of the control variable via the signal transmission system (3) at the bus user (4, 5) assigned to the actuator (8, 9).

5. Computer program product with computer-implemented instructions which, after loading into a programmable control system (2) of a control system (1) according to any of claims 1 to 3, is designed to execute the process steps according to claim 4.

## Revendications

1. Système de réglage pour la commande d'un actionneur (8, 9), en particulier d'un vérin fluidique ou d'un muscle fluidique, comportant un dispositif de commande par programme enregistré (2), un système de transmission de signaux (3), un actionneur (8, 9), un participant au bus (4, 5) associé à l'actionneur (8, 9) et un capteur (10, 11), dans lequel le système de transmission de signaux (3) conçu en tant que système de bus de terrain est électriquement relié au dispositif de commande par programme enregistré (2) et au participant au bus (4, 5) et est conçu pour une transmission de signaux entre le dispositif de commande par programme enregistré (2) et le participant au bus (4, 5), dans lequel le capteur (10, 11) est associé à l'actionneur (8, 9) pour la détermination d'un état de fonctionnement et pour la fourniture d'un signal de capteur au dispositif de commande par programme enregistré (2), dans lequel le capteur (10, 11) est en liaison électrique avec le participant au bus (4, 5) pour une fourniture du signal de capteur par l'intermédiaire du système de transmission de signaux (3) au dispositif de commande par programme enregistré (2) et dans lequel, dans le dispositif de commande par programme enregistré (2), un organe de réglage est conçu pour la commande de l'actionneur (8, 9) à l'aide de commandos et des signaux de capteur du capteur (10, 11), dans lequel l'organe de réglage comporte un algorithme de réglage qui est conçu pour la compensation de propriétés non linéaires d'un système asservi assujetti à l'actionneur (8, 9), dans lequel l'organe de réglage est mis en oeuvre en tant que module logiciel dans le dispositif de commande par programme enregistré (2), **caractérisé en ce que** l'organe de réglage comporte au moins un algorithme d'observation qui est conçu pour une détermination d'un signal de capteur virtuel à l'aide du signal de capteur et/ou d'une grandeur de commande pour l'actionneur à l'aide d'un modèle mathématique non linéaire.

2. Système de réglage selon la revendication 1, **caractérisé en ce que** sont prévus un capteur (10, 11) pour une détection d'une position d'un actionneur et/ou un capteur (10) pour une détection d'une pression fluidique dans l'actionneur (8, 9) et/ou un capteur (10, 11) pour une force d'avance exercée par l'actionneur (8, 9).

3. Système de réglage selon la revendication 1 ou 2, **caractérisé en ce que** l'organe de réglage est conçu pour la sortie d'une position de vanne en tant que grandeur de sortie.

4. Procédé de fonctionnement d'un actionneur (8, 9), en particulier d'un vérin fluidique ou d'un muscle fluidique, au moyen d'un dispositif de commande par programme enregistré (2) qui est relié électriquement par l'intermédiaire d'un système de transmission de signaux (3) à l'actionneur (8, 9), dans lequel un capteur (10, 11) relié électriquement au participant au bus (4, 5) est associé à l'actionneur (8, 9) pour la détermination d'un état de fonctionnement et pour la fourniture d'un signal de capteur au dispositif de commande par programme enregistré (2), **caractérisé par** les étapes : fourniture d'une grandeur de consigne pour l'actionneur (8, 9) par une commande séquentielle prévue dans le dispositif de commande par programme enregistré (2) ; détermination d'une grandeur réelle pour l'actionneur (8, 9) à l'aide d'au moins un signal de capteur du capteur (10, 11) dans le dispositif de commande par programme enregistré (2) ; détermination d'une grandeur de commande pour l'actionneur (8, 9) au moyen d'un module logiciel, enregistré dans le dispositif de commande par programme enregistré (2), qui comporte un algorithme de réglage qui est conçu pour la compensation de propriétés non linéaires d'un système asservi assujetti à l'actionneur (8, 9) et qui comporte un algorithme d'observation qui est conçu pour une détermination d'un signal de capteur virtuel à l'aide du signal de capteur mesuré et/ou d'une grandeur de commande pour l'actionneur à l'aide d'un modèle mathématique non linéaire ; remise de la grandeur de commande par l'intermédiaire du système de transmission de signaux (3) au participant au bus (4, 5) associé à l'actionneur (8, 9).

5. Produit-programme d'ordinateur avec des instructions mises en oeuvre par ordinateur, qui est conçu, après le chargement dans un dispositif de commande par programme enregistré (2) d'un système de réglage (1) selon l'une quelconque des revendications 1 à 3, pour exécuter les étapes de procédé selon la revendication 4.
